# EUROPEAN PATENT APPLICATION

(11) **EP 2 721 935 A1**
(43) Date of publication of application: **23.04.2014**
(21) Application number: 12425170.3
(22) Date of filing: 18.10.2012
(51) Int. Cl.: A23L 3/00, A23L 3/005, A23L 3/04

(54) **System for controlling a machine for temperature processing of food products containers, and related machine**

(71) Applicant: Sidel S.p.A. Con Socio Unico, 43100 Parma (IT)
(72) Inventor: Berzaghi, Claudio, 43100 Parma (IT)
(74) Representative: D'Angelo, Fabio

(57) **Abstract**

A control system for controlling a machine (1) for the temperature processing of containers (3) for food products, having a movement element (2) for moving containers (3) to be processed on a movement path along which at least one temperature processing zone (4; 5; 6) is defined, where the temperature of the containers (3) is brought to a desired value, the temperature processing zone being divided into a plurality of sub-zones, each having a respective injection assembly (8) for injecting processing fluid (9) on the containers (3) and a respective adjusting assembly (17, 18, 19) for setting the temperature of the injected processing fluid; the control system has a control unit (20) coupled to the adjusting assemblies of the sub-zones to regulate the temperature of the processing fluid, and at least one temperature sensing unit (22) located inside the machine at the temperature processing zone to detect a temperature of the containers. The control unit (20) is coupled to the temperature sensing unit (22) to regulate the temperature of the processing fluid, based on temperature signals provided by the temperature sensing unit (22).

## Description

The present invention relates to a system for controlling a machine, generally intended for temperature processing of containers designed to contain food products; in particular, the following discussion will make explicit reference, without this implying any loss of generality, to a tunnel pasteurising machine (or pasteuriser) for pasteurising packaged food products.

As it is known, in a tunnel pasteuriser, food products to be pasteurised, packaged in bottles, cans or other containers, are fed by a conveyor along a forward movement path, which is usually divided into three main processing zones: a heating zone in which the product temperature is gradually raised; a heat-treatment zone in which the product temperature is brought to, and kept at, a pasteurising temperature for a desired time interval; and a cooling zone in which the product temperature is gradually lowered up to a desired output temperature.

At the end of the temperature processing (i.e. at the output of the pasteuriser), it is required for the food products to have been kept above a predetermined temperature for at least a predetermined time, so as to have accumulated at least a predetermined quantity of pasteurisation units (PUs). In this way, effective pasteurisation of the processed product may be assured.

Each processing zone is, in turn, divided into a plurality of sub-zones, each one of which is operable and controllable independently from the others. The products, in each sub-zone, are processed by injecting thereon a flow of a fluid at a desired predetermined temperature. Usually, the fluid is a liquid, such as water, which is injected, sprayed, or applied in any equivalent manner on the products, although other fluids may as well be used, like a gas, such as air.

In particular, each sub-zone comprises a spraying unit positioned above the forward movement path of the products, and, in a possible solution, at least one collection tank positioned below the same forward movement path to collect the liquid, sprayed by the spraying unit, after it has wet the products.

According to a known solution, the processing liquid fed to the spraying units of the various sub-zones is taken, at least in part, from the collection tanks.

In particular, a process of recirculation is implemented, according to which the liquid fed to the spraying units of the heating sub-zones is taken from the tanks of the cooling sub-zones, whilst the liquid fed to the spraying means of the cooling sub-zones is taken from the tanks of the heating sub-zones. In this way, it is possible to achieve an effective energy saving, thanks to the fact that heat transferred to the processing liquid by the products in the cooling zones may be used to heat the products in the heating zones, while the cooled down processing liquid collected in the heating zones may be used to cool down the products in the cooling zones. Moreover, in the heat treatment zone, the liquid fed to the spraying means of each sub-zone is usually taken directly from the collection tank of that sub-zone.

Suitable temperature-control elements are also envisaged, in order to keep the processing liquid at the desired temperatures in the various zones and sub-zones of the pasteuriser, e.g. including heat exchangers and/or chillers with refrigerating liquid (such as water).

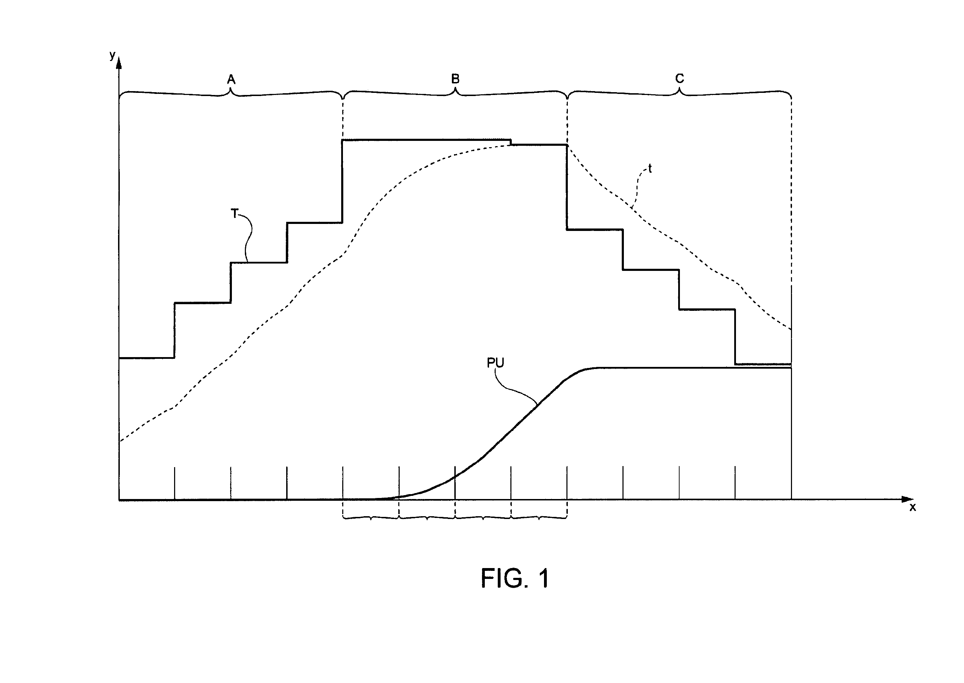

Figure 1 shows a graph, with time on the x-axis and both temperatures and pasteurisation units on the y-axis, relating to a pasteurisation treatment in the pasteuriser discussed above.

The graph shows: the product theoretical heating thermal trend (dotted curve t); the temperature of the processing liquid injected on the products (continuous curve T); and the accumulation trend of product pasteurisation units (bold continuous curve PU).

In a typical case, in which the speed of the conveyor is assumed to be constant, the graph may also be interpreted as a portrait of the system condition at each given moment. In this case, the x-axis shows the position of each product along the forward movement path, whilst the y-axis shows the values of the temperature t of the products, the temperature T of the processing liquid and the quantity of pasteurisation units PU accumulated for each product at that specific position.

Accordingly, Figure 1 also shows the heating zone A, the heat treatment zone B and the cooling zone C. By way of example, each zone is shown as being divided in four subzones, with the direction of the product forward movement being from left to right, as shown by the arrow of the x-axis.

As previously explained, the various temperature-control elements along the path of the products are controllable so that the temperature of the processing liquid in each zone and sub-zone is kept at a desired value, depending on the requirements specific to the products being processed, in order to assure that the products are treated at an appropriate temperature.

In particular, in many applications, in order to guarantee the final quality of the processed product, it is required that the output temperature of the products at the end of the pasteurisation treatment is maintained in a desired range, and a control action is implemented so that the output temperature is not higher than an upper output temperature threshold, nor is below a lower output temperature threshold.

In a known solution, control of the output temperature is achieved by regulating the temperature of the processing liquid injected on the products in the various sub-zones of the cooling zone of the pasteuriser. In particular, for each sub-zone of the cooling zone, the control actions on the temperature-control elements is such that the temperature of the processing liquid is kept below a respective upper limit value.

Moreover, it is also required to control the temperature treatment in the heat-treatment zone, so as to assure that the products receive a correct amount of PUs for the pasteurization process to be effective.

For example, EP-A1-1 972 210 discloses a method for predicting the correct outcome of the pasteurisation treatment in the heat treatment zone, aimed to avoid an excessive pasteurisation, or, on the contrary, to avoid that the products receive an insufficient number of PUs.

The temperature predicting method envisages monitoring of the products at a plurality of reference points distributed along the heat-treatment zone, in order to follow the thermal treatment of the same products.

A number of data are detected and stored for the products located at each reference point, among which: the current temperature of the products (that is estimated based on the previous thermal trend and the thermal coefficient exchange with the processing fluid at the current location); the temperature of the processing fluid injected at the current location; the time elapsed since entering the pasteurisation tunnel; any dwell time at the current location; the feeding speed of the conveyor; the pasteurisation units accumulated up to the current moment (calculated based on the product thermal trend). Experimental data and empirical formulas are used to calculate the temperature of the products and the accumulated pasteurisation units.

The outcome of the pasteurization process is then predicted, based on the data stored for the products up to the current moment and at least one predicted system future operating condition. In particular, if the condition of the products at each reference point is known, then, supposing feed at constant speed from that moment onwards and a predetermined fluid temperature in each successive zone and sub-zone, it is possible to calculate the thermal trend to which the individual products will be subjected in the remaining portion of the heat-treatment zone and the number of PUs the same products will accumulate.

The Applicant has realized that a relevant issue for the correct control of the pasteurising machine may lie in the calculation or estimation of the temperature of the products inside the machine; indeed, many aspects of the control action are based on the calculated or estimated product temperature values.

Currently, in order to check the validity of the calculation or estimation, at predetermined time intervals, temperatures inside the machine are measured with a measuring instrument (so called "PU logger"), which is introduced in the machine and measures temperatures inside a sample container during a whole thermal cycle of pasteurisation. The measuring instrument consists of a small data logger with reduced size, that fits into a sample bottle or can, and measures temperature and pressure values during the pasteurisation cycle, while the sample can or bottle is being processed in the tunnel, possibly with other cans/bottles containing the products being pasteurised. The PU logger, as an alternative, may include a temperature probe to be inserted in the sample container, and possibly a further temperature probe to measure the temperature of the sprayed fluid, and a processor to store temperature values and calculate PU accumulation values.

Although advantageous, the use of such temperature data loggers cannot avoid errors in the calculation or estimation of the product temperatures, e.g. if relevant changes occur in the time interval between two consecutive samplings.

The aim of the present invention is consequently to solve, at least in part, the problems previously highlighted, and in particular to provide a solution that will allow to improve the accuracy of determination of the temperature of the products inside the pasteurisation machine, thus improving the control action based on the same product temperatures.

According to the present invention, a system for controlling a machine for temperature processing of containers for food products, and the related machine, are provided, as defined in the appended claims.

For a better understanding of the present invention, preferred embodiments thereof are now described, purely by way of non-limiting example, with reference to the attached drawings, wherein:
- Figure 1 shows a plot of quantities related to a pasteurising process;
- Figure 2 shows a schematic representation of the layout of a pasteurising machine, according to an aspect of the invention; and
- Figure 3 is a schematic representation of a temperature sensing unit in the pasteurising machine of Figure 2.

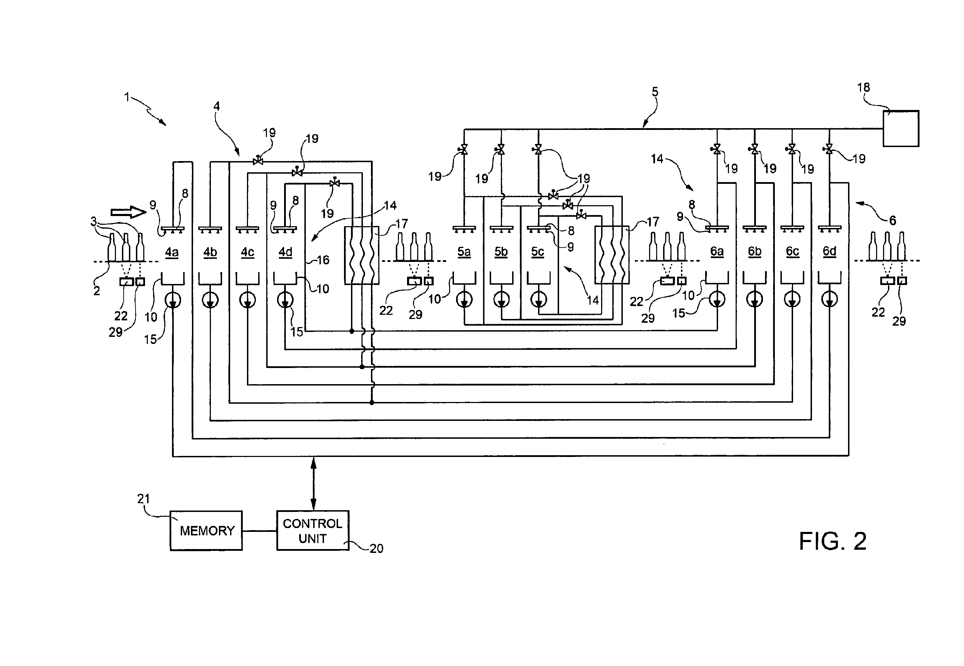

Figure 2 schematically shows a tunnel pasteurising machine, denoted as a whole with 1, including a forward movement element 2, which may consist, for example, of one or more conveyor belts or any other type of conveyors, for moving containers 3 containing the products to be pasteurised (e.g. bottles, as shown in the drawing) along a forward movement path.

The machine 1 includes a heating zone 4, a heat treatment zone 5 and a cooling zone 6 positioned one after another along the forward movement path, in order to carry out pasteurisation of the containers 3.

Each one of the heating, heat treatment and cooling zones 4, 5, 6 is further divided into a number of sub-zones positioned one after another along the same forward movement path; in the exemplary embodiment shown in Figure 2, the heating zone 4 is divided into four sub-zones 4a-4d; the heat treatment zone 5 is divided into three respective sub-zones 5a-5c; and the cooling zone 6 is divided into four respective sub-zones 6a-6d.

Each one of the above sub-zones is provided with a respective spraying or injecting element 8 for spraying or injecting a processing fluid 9 (for example water) onto the containers 3 that are carried by the forward movement element 2 in the same sub-zone, and with a respective collecting element 10, e.g. a tank, for collecting the processing fluid 9 after it has been sprayed on the containers 3 (i.e. after it has exchanged heat with the same containers 3). In the shown embodiment, the spraying elements 8 and the collecting elements 10 are positioned above and, respectively, below the forward movement path defined by the forward movement element 2, so as to exploit the gravity effect for the movement of the fluid.

In a known manner, which is not shown in detail, a fluid system 14 is associated with each spraying element 8, for controlling spraying of the processing fluid 9 and feeding thereof.

The fluid system 14 includes a pump 15, e.g. a centrifugal pump, coupled to a respective collecting element 10, a fluid duct 16 feeding the spraying element 8, and regulating elements controllable to regulate the temperature of the processing fluid 9 to be sprayed.

The regulating elements may include: heat exchangers and/or chillers 17, which may be e.g. coils immersed in the water of the collecting elements 10, or a tube nest, installed outside the collecting elements 10 and in line with the delivery port of each pump 15; an external cold source 18, which may provide a refrigerating liquid; and suitable valves 19 coupled to the respective fluid duct 16.

Again in a known manner, the fluid systems 14 are controlled to implement recirculation of the processing liquid 9, so that the processing liquid 9 fed to the spraying elements 8 of the heating sub-zones 4a-4d is taken from the collecting elements 10 of the cooling sub-zones 6a-6d, and the processing liquid 9 fed to the spraying elements 8 of the cooling sub-zones 6a-6d is taken from the collecting elements 10 of the heating sub-zones 4a-4d, in order to achieve a energy saving.

Additional temperature regulation, in addition to the one directly provided by the recirculation process, is achieved by suitable control of the regulating elements.

In a way that is not shown, filter elements may be coupled to the collecting elements 10, for preventing contaminants from infiltrating the processing fluid 9.

Moreover, movable elements may be provided to direct the collected fluid from one collecting element 10 towards another one, in order to provide further means for recirculation of the processing fluid 9, as disclosed e.g. in EP-A1-2 058 386.

The pasteurising machine 1 further comprises a control unit 20, including a microprocessor or other suitable processing element, coupled to the fluid systems 14 of the spraying elements 8, in order to control the pasteurisation process, and in particular the temperature of the processed fluid 9 sprayed by each one of the spraying elements 8. The control unit 20 may be included in an industrial PC designed to control the general operation of the pasteurising machine 1.

The control unit 20 is provided with a memory 21, where instructions, configuration information and data are stored, and receives feedback signals from sensors coupled to the spraying elements 8, including temperature sensors (not shown) for detecting the temperature of the processing fluid 9 sprayed by the same spraying elements 8.

According to an aspect of the present invention, the pasteurising machine 1 includes a number of temperature sensing units 22, located inside the machine at predetermined locations, in order to sense the temperature of the containers 3 carried by the forward movement element 2.

The temperature sensing units 22 are designed to detect temperature of the containers 3, via a distance, contactless, measurement. The temperature sensing units 22 may accordingly include any kind of sensors suitable for this purpose, for example: a piroelectric sensor; a mean radiant sensor; or an infrared (IR) sensor.

The temperature sensing units 22 may be located at the input of each heating, heat-treatment and cooling zones 4, 5, 6 and/or at the output of the tunnel of the pasteurising machine 1, at the end of the temperature processing (as is the case shown in Figure 2).

In particular, the temperature sensing units 22 are located at a location where no spraying elements 8 are present, so that the temperature measurement is not affected by the presence of the processing fluid 9 on the products 3.

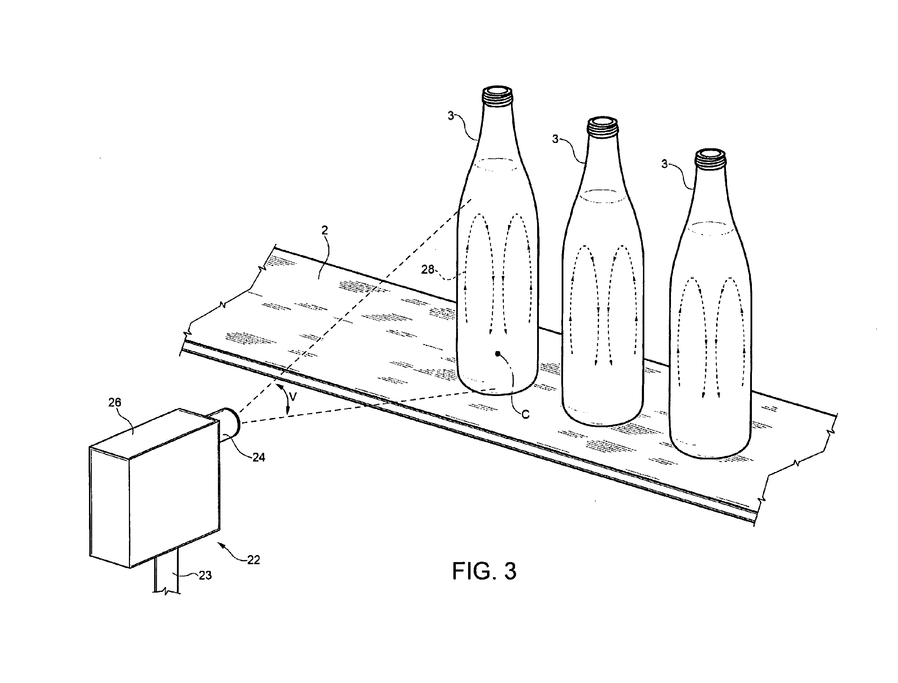

As schematically shown in figure 3, each temperature sensing unit 22 is carried by a support structure 23, so that its field of view V, which is determined by the optical system 24 of the same temperature sensing unit 22, is directed towards the containers 3, moving on the forward movement element 2.

The temperature sensing unit 22 also includes a casing 26, housing suitable electronics and sensing units, for example a thermocouple element, or a piroelectric element, and supplies at output (in a way not shown) suitable temperature signals indicative of the detected temperature of the containers 3.

In particular, the field of view V is advantageously centred with respect to a so called "cold spot" C of the containers 3, which is a zone located at the bottom of the containers 3 that usually remains at the lowest temperature, due to convection currents 28 originating within the same containers 3. Measuring the temperature of the product at the cold-spot may be advantageous, in order to perform a "worst-case" measurement.

As it is known, the liquid within the containers 3 cannot be considered to be a uniform mass at an equal temperature. The liquid is heated by the processing fluid 9 indirectly through the walls of the containers 3, and this causes the formation of convection currents 28. It has been shown that a thin layer of heated liquid rises quickly up the walls of the containers 3, slowly forcing a wide column of cooler liquid down the centre of the same containers 3. At the bottom of the containers 3, a thin layer of turbulence is generated, above which the liquid is at its coolest temperature; this zone corresponds to the above defined cold-spot.

The temperature signals detected by the temperature sensing units 22 are collected by the control unit 20, which, based on the same temperature signals, is able to determine the temperature of the products contained in the containers 3 (e.g. by means of experimental formulas and characterization data).

As shown in Figure 2, the pasteurising machine 1 may further comprise a number of presence (or proximity) sensors 29, e.g. including a capacitive sensor, an inductive sensor, an electromagnetic sensor, or any suitable known sensor element, configured to detect the presence of the containers 3 in the machine 1.

A presence sensor 29 may be arranged at the entrance of the tunnel of the pasteurising machine 1, at the start of the forward movement path defined by the forward movement element 2. Product-presence information detected by the presence sensors 29 are conveyed to the control unit 20, which, thanks to the further knowledge of the moving speed (usually constant) of the forward movement element 2, is able to keep track of the presence of the same containers 3 along the whole forward movement path.

Advantageously (as shown in Figure 2), further presence sensors 29 may be arranged, one at each temperature sensing unit 22, in order to allow the control unit 20 to check that the temperature signals provided by the temperature sensing units 22 are indeed related to the passing containers 3.

In general, the product temperature information provided by the temperature sensing units 22 in the pasteurising machine 1 may be used by the control unit 20 for a number of purposes related to the implemented control algorithm.

For example, the product temperature information may be used to: determine the thermal coefficients for the thermal exchange between the containers 3 and the processing fluid 9 at each zone and sub-zone of the temperature processing; monitor the efficiency of the spraying elements 8 in the tunnel; check the correctness of the estimates and predictions made by the control algorithm and, in case, align the same estimates and predictions to the sensed values. In particular, in the case of the temperature predicting method disclosed in EP-A1-1 972 210, the product temperature information may allow to more closely and accurately follow the thermal trends of the products to achieve more accurate predictions of the estimated temperatures.

The product temperature information may also allow to detect anomalous conditions and to timely react thereto, e.g. spray anomalies, clogged spray nozzles, unforeseen conveyor stops, or cases when the moving conveyor is not loaded, or not fully loaded, with products.

In other words, the control unit 20 is able to directly monitor a parameter (temperature) of the containers 3, differently from known methods, where only parameters of the pasteurising machine 1 (such as the temperature of the processing fluid 9 injected by the spraying elements 8) are directly detected.

The advantages of the present solution are evident from the foregoing description.

In any case, it is again emphasized that the direct measurement of the temperature of the containers 3 (and/or the products contained therein) allows to improve a number of aspects in the control of the pasteurising machine 1, and to generally improve its operation and reliability in the temperature processing of the same products.

The discussed solution may also be easily fitted (so called "retro-fit" operation) to existing machines, by suitable reprogramming of the related control unit and addition of the temperature sensing units inside the pasteurisation tunnel.

Finally, it is clear that modifications and variations may be made to what has been described and illustrated herein, without thereby departing from the scope of the present invention, as defined in the annexed claims.

For example, it is evident that the disclosed solution may be implemented in other types of machines, wherever control of a temperature of processed products is to be achieved. For example, the discussed solution may be implemented in a bottle washer, e.g. to control the temperature of the cleaned bottles during a rinsing phase.

## Claims

1. A control system for controlling a machine (1) for the temperature processing of containers (3) for food products, the machine (1) including a movement element (2) for moving containers (3) to be processed on a movement path along which at least one temperature processing zone (4; 5; 6) is defined, where the temperature of the containers (3) is brought to a desired value, the temperature processing zone being divided into a plurality of sub-zones (4a-4d; 5a-5c; 6a-6d) each having a respective injection assembly (8) for injecting processing fluid (9) on the containers (3) and a respective adjusting assembly (17, 18, 19) for setting the temperature of the injected processing fluid (9); the control system including a control unit (20) operatively coupled to the adjusting assemblies (17, 18, 19) of the sub-zones in order to regulate the temperature of the processing fluid (9),
**characterized by** comprising at least one temperature sensing unit (22) located inside said machine at said temperature processing zone (4; 5; 6) and configured to detect a temperature of said containers (3); wherein said control unit (20) is operatively coupled to said temperature sensing unit (22) and configured to regulate the temperature of the processing fluid (9), based on temperature signals provided by said temperature sensing unit (22).

2. The control system according to claim 1, wherein the temperature sensing unit (22) is configured to detect said temperature via a contactless measurement.

3. The control system according to claim 1 or 2, wherein the temperature sensing unit (22) includes one of: a piroelectric sensor; a mean radiant sensor; or an infrared (IR) sensor.

4. The control system according to any of claims 1-3, wherein the temperature sensing unit (22) has a field of view (V) configured to be directed to a bottom portion of said containers (3).

5. The control system according to any of claims 1-4, wherein the temperature sensing unit (22) is located at a position where no injection assemblies (8) are present, so that temperature detection is not affected by the presence of the processing fluid (9) on the containers (3).

6. The control system according to any of the preceding claims, the machine (1) being a pasteuriser, and the movement path defining at least one heating zone (4), where temperature of the containers (3) entering the machine (1) is raised, a heat treatment zone (5), consecutive to the heating zone (4) along the movement path, where the containers (3) are designed to receive a desired quantity of pasteurisation units (PUs), and a cooling zone (6), where the temperature of the containers (3) is lowered up to a desired value; each one of the heating (4), heat-treatment (5) and cooling (6) zones being divided into a plurality of sub-zones (4a-4d; 5a-5c; 6a-6d), each sub-zone having a respective injection assembly (8) for injecting processing fluid (9) on the containers (3) and a respective adjusting assembly (17, 18, 19) for regulating the temperature of the processing fluid (9); the control system comprising a number of temperature sensing units (22), each one located at the input of a respective one of the heating (4), heat-treatment (5) and cooling (6) zones and/or at the output of the movement element (2), at the end of the temperature processing.

7. The control system according to any of the preceding claims, further comprising at least a presence sensor (29), arranged at said temperature sensing unit (22), and configured to detect the presence of the containers (3); wherein the control unit (20) is operatively coupled to the presence sensor (29) and is configured to: locate the presence of containers (3) along the movement path based on presence information provided by said presence sensor (29); and detect the temperature of the located containers (3), by means of said temperature sensing unit (22).

8. The control system according to any of the preceding claims, wherein the control unit (20) is configured to perform a prediction of the temperature the containers (3) located on said movement path will assume in a future operating condition of the machine (1), based on a current operating condition of the machine (1) and a past thermal trend for said containers (3), determined based on the temperature signals provided by said temperature sensing unit (22).

9. A machine (1) for the temperature processing of containers (3) for food products, including a movement element (2) for moving containers (3) to be processed on a movement path along which at least one temperature processing zone (4; 5; 6) is defined, where the temperature of the containers (3) is brought to a desired value, the temperature processing zone being divided into a plurality of sub-zones (4a-4d; 5a-5c; 6a-6d) each having a respective injection assembly (8) for injecting processing fluid (9) on the containers (3) and a respective adjusting assembly (17, 18, 19) for setting the temperature of the processing fluid (9),
wherein the machine (1) comprises a control system according to any of the preceding claims.

10. A control method for controlling a machine (1) for the temperature processing of containers (3) for food products, the machine (1) including a movement element (2) for moving containers (3) to be processed on a movement path along which at least one temperature processing zone (4; 5; 6) is defined, where the temperature of the containers (3) is brought to a desired value, the temperature processing zone being divided into a plurality of sub-zones (4a-4d; 5a-5c; 6a-6d) each having a respective injection assembly (8) for injecting processing fluid (9) on the containers (3) and a respective adjusting assembly (17, 18, 19) for setting the temperature of the injected processing fluid (9); the control method including the step of regulating the temperature of the processing fluid (9),
**characterized in that** the step of regulating comprises detecting a temperature of said containers (3) inside said machine at said temperature processing zone (4; 5; 6) by means of at least one temperature sensing unit (22), and regulating the temperature of the processing fluid (9), based on the temperature detected by said temperature sensing unit (22).
